Europäisches Patentamt

European Patent Office

Office européen des brevets

(11) Publication number: **0 311 113**
**A2**

## EUROPEAN PATENT APPLICATION

(21) Application number: **88116676.3**

(51) Int. Cl.⁴: **G01B 3/12**

(22) Date of filing: **07.10.88**

(30) Priority: **07.10.87 JP 254407/87**

(43) Date of publication of application:
**12.04.89 Bulletin 89/15**

(84) Designated Contracting States:
**DE FR GB**

(71) Applicant: **TAIYODO CO., LTD.**
**9-16, Ikue 2-chome**
**Asahi-ku Osaka(JP)**

Applicant: **TOHO ELECTRONICS**
**CORPORATION**
**Koshin Building, 32-11 Nishigotanda**
**1-chome**
**Shinagawa-ku Tokyo(JP)**

(72) Inventor: **Ohta, Shozo**
**2-8, Shinmori 4-chome**
**Asahi-ku Osaka(JP)**
Inventor: **Yamamoto, Shizuo**
**34-20, Shimura 1-chome**
**Itabashi-ku Tokyo(JP)**

(74) Representative: **Patentanwälte TER MEER -**
**MÜLLER - STEINMEISTER**
**Mauerkircherstrasse 45**
**D-8000 München 80(DE)**

(54) Device for measuring distance along curve.

(57) A measuring device comprising a key input unit
(4) and a display (5) provided on a portable casing
(1), and a tracer (2) in the form of a disk and
rotatably supported by the casing. The tracer (2) is
coupled to a data processing circuit (3) via an en-
coder (21) for detecting the angle of rotation of the
tracer. In accordance with the angle of rotation of the
tracer (2), the circuit (30) prepares distance data
from the output signal from the encoder (21) and
feeds the distance data to the display (5). When a
curved path on a map is traced with the tracer (2)
pressed against the map with the casing (1) held by
hand, the display (5) shows the measured distance
as converted according to the scale of the map.

**FIG.2**

## DEVICE FOR MEASURING DISTANCE ALONG CURVE

### FIELD OF THE INVENTION

The present invention relates to a device for measuring a distance along a curved path on maps or the like.

### BACKGROUND OF THE INVENTION

Various types of instruments have heretofore been proposed for measuring the length of a curve interconnecting optional locations on maps as disclosed, for example, in Unexamined Japanese Utility Model Publications SHO 59-142705, SHO 59-142714, SHO 60-72516 and SHO 61-52207, etc.

These instruments have a rotary tracer at one end of the casing of the instrument. When the curve on the map is traced by the tracer, a gear mechanism coupled to the tracer operates to show the distance of movement of the tracer on the map on a graduated indicator provided at the output portion of the gear mechanism.

With the conventional instrument, however, the indicator merely shows the distance covered on the map, so that the value on the indicator must be converted according to the scale of the map for the user to recognize the actual distance, hence inconvenience. This problem can be solved by marking the indicator with graduations for scale conversion, but another problem then arises in that the instrument is not usable for maps of different scales.

### SUMMARY OF THE INVENTION

An object of the present invention is to provide a device for measuring a distance along a curved path on maps which device is so adapted that when it is moved along the curved path on the map, the distance of movement thereon can be automatically converted to the corresponding actual distance according to the scale of the map to display the actual distance.

Another object of the invention is to provide a device of the type stated above wherein the data thus obtained can be subjected to a desired arithmetic operation or otherwise processed as specified.

The measuring device of the present invention has a portable casing which is provided with a key input unit having function keys and number entry keys (ten keys), a display for showing numerical values, a rotatable tracer in the form of a disc and having at least a portion of its periphery exposed from the casing, and an encoder coupled to the tracer for detecting the angle of rotation thereof.

The casing is internally provided with a data processing circuit comprising a microcomputer or the like. The circuit comprises a counter for counting output pulses from the encoder, data storage means having stored therein a procedure for converting the output of the counter to distance data, command interpretation means for interpreting signals from the function keys, and data processing means for retrieving the procedure from the data storage means according to the result of interpretation, receiving conversion data set by the ten-key arrangement, calculating distance data from the output of the counter and the conversion data by the procedure and feeding the distance data to the display.

To measure the desired distance along a curved path on the map, number entry keys are first depressed to enter a conversion data representing the scale of the map, and one of the function keys is depressed to give a measurement start instruction to the data processing circuit, whereby the conversion data is fed to the data processing means.

The tracer is then moved along the contemplated curved path on the map with the periphery of the tracer pressed against the map with the hand holding the casing. Since the tracer is in the form of a disc, the path can be accurately traced with the direction of advance altered along the path, whereby the tracer is rotated through an angle corresponding to the distance of movement. The angle of rotation of the tracer is detected by the encoder, which in turn feeds detection pulses to the counter of the data processing circuit.

Further the signal from the depressed function key is sent to the command interpretation means, whereby the specified procedure in the data storage means is retrieved by the data processing means.

The data processing means processes the count value of the counter with the conversion data by the procedure to prepare distance data in accordance with the angle of rotation of the tracer, i.e. with the distance of movement thereof on the map, and feeds the data to the dispaly.

Consequently, the display shows the numerical value of the distance measured and converted according to the scale.

With the distance measuring device of the present invention, the scale of the map used for measuring the distance is keyed in, whereby the measurement data is automatically calculated for scale conversion as required to display the result on real time basis. Accordingly, distances can be measured rapidly on various maps which are different in scale.

## BRIEF DESCRIPTION OF THE DRAWINGS

Fig. 1 is a perspective view showing a measuring device embodying the invention as it is used;

Fig. 2 is a plan view of the device having keys and a display;

Fig. 3 is a plan view showing the interior of the device;

Fig. 4 is an enlarged plan view showing the construction of an encoder;

Fig. 4A is an enlarged sectional view showing an encoder contact portion;

Fig. 4B is a waveform diagram of detection pulses produced by the encoder;

Fig. 5 is a block diagram schematically showing the construction of the measuring device;

Fig. 6 is a block diagram showing a data processing circuit included in the device;

Fig. 7 is a diagram showing changes in the operation mode of the device effected by the depression of function keys; and

Figs. 8 to 10 are flow charts showing the operation of the data processing circuit in different modes.

## DESCRIPTION OF THE PREFERRED EMBODIMENT

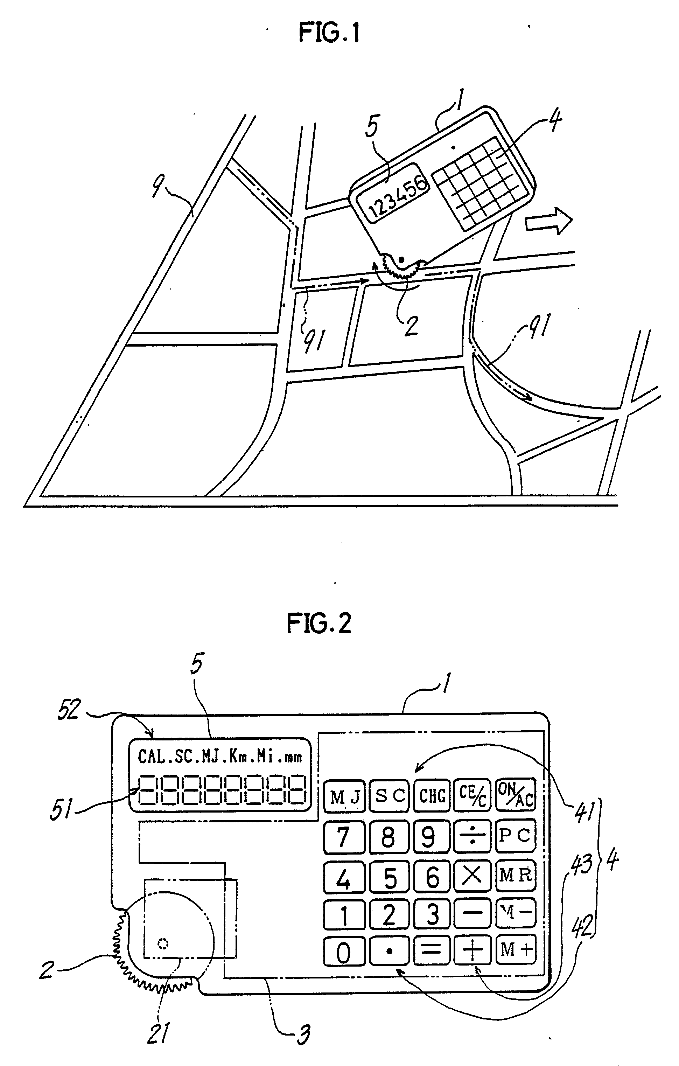

Figs. 1 and 2 show the appearance of a device of the invention for measuring distances along curves. The measuring device comprises a casing 1 and a map tracer 2 attached to the casing. When the tracer 2 is moved the distance to be measured along a curved path 91 on a map 9 while being pressed against the map with the hand holding the casing 1, a display 5 on the casing shows the actual distance as converted according to the scale of the map 9.

The casing 1 measures 6.3 mm in thickness, 83.7 mm in length and 54.0 mm in width, is in the form of a card and can be carried as placed in a pocket of garments.

The casing 1 has on its front side a key input unit 4 which comprises number entry keys 42 and arithmetic keys 43 for performing arithmetic calculations, like those provided on the conventional desk-top electronic calculator. The unit 4 further comprises a plurality of function keys 41 as will be described later. The display 5, which is of the liquid-crystal type, is provided beside the key input unit 4.

The function keys 41 of the key input unit 4 include "MJ" key to be depressed when starting measurement, "SC" key to be depressed for entering a scale conversion factor, "CHG" key to be depressed when the distance is to be displayed in mileage, "CE/C" key for clearing all calculation registers in the circuit, "ON/AC" key for turning on or off the power supply, and "PC" key to be depressed when the measurement data is to be subjected to a specified calculation.

The display 5 comprises an 8-digit numerical display portion 51, and 6 auxiliary display portions 52, i.e. "CAL," "SC," "MJ," "Km," "Mi" and "mm."

The casing 1 has at its lower left corner the map tracer 2 in the form of a disk having a saw-toothed periphery and measuring 12.7 mm in diameter and 40.0 mm in circumference. The map tracer 2 is free to rotate and has a portion of its outer periphery exposed from the casing 1. Accordingly, the curved path 91 can be traced with the map tracer 2 only held in contact with the map 9 as seen in Fig. 1.

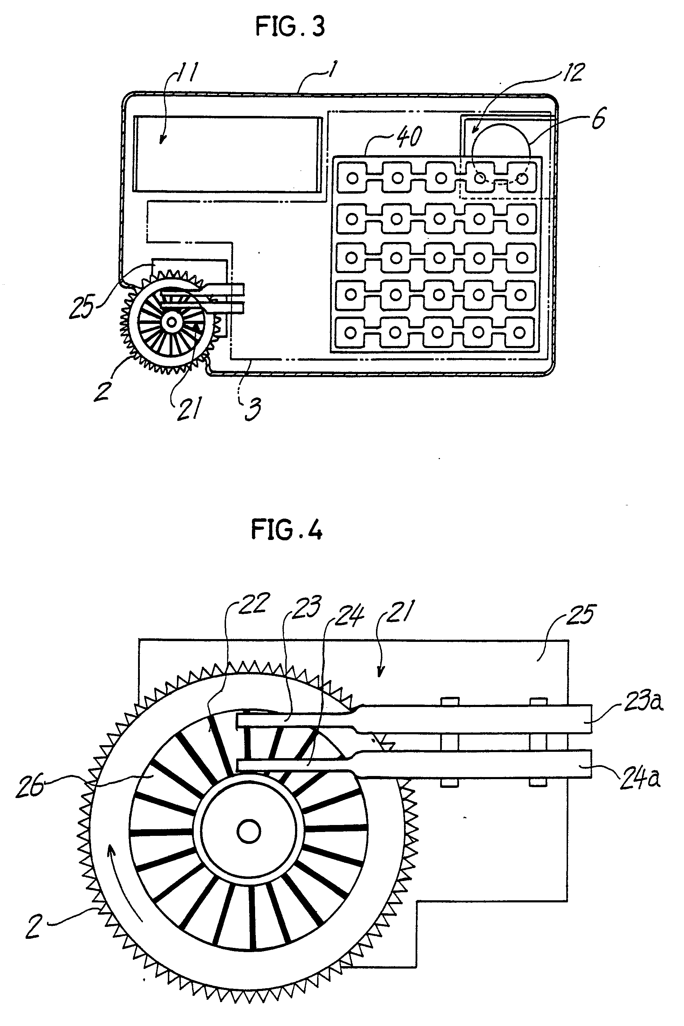

With reference to Fig. 3, the casing 1 is internally provided with a known sheet key arrangement 40 constituting the key input unit 4. A desired key contact, when closed, produces a depression signal, which is fed to a data processing circuit 30 provided on a circuit board 3. The casing 1 further has a portion 11 for accommodating the display 5, and a portion 12 for accommodating a lithium battery 6 serving as a d.c. power supply.

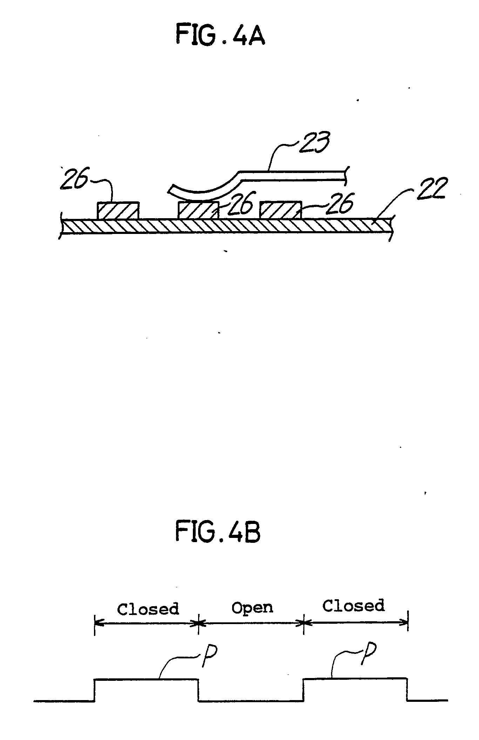

The map tracer 2 is supported by a support plate 25 and provided at the above-mentioned corner of the casing 1. An encoder base plate 22 is secured to one side face of the map tracer 2 so as to be rotatable therewith. As seen in Fig. 4, twenty electrode strips 26 are arranged radially on the base plate 22 at an angular pitch of 18 degrees. The support plate 25 is provided with two electrode brushes 23 and 24. As shown in Fig. 4A, the forward ends of the two brushes can be contacted with the respective ends of each electrode strip 26. As shown in Fig. 4, the brushes have at their base ends terminals 23a and 24a for connection to the data processing circuit 30. The encoder base plate 22 and the brushes 23, 24 constitute an encoder 21 for detecting the angle of rotation of the map tracer 2. Every time the map tracer rotates through 18 degrees to move 2 mm, the forward ends of the brushes 23, 24 are electrically connected together by the electrode strip. The data processing circuit 30 connected to the encoder 21 produces a detection pulse upon detecting the electrical connection of the two brushes 23, 24. Accordingly, when the map tracer 2 rotates continuously, repeatedly closing and opening the contact of the encoder 21, the encoder 21 produces a series of detection pulses P with a period as shown in Fig. 4B in accordance with the angle of rotation of the tracer.

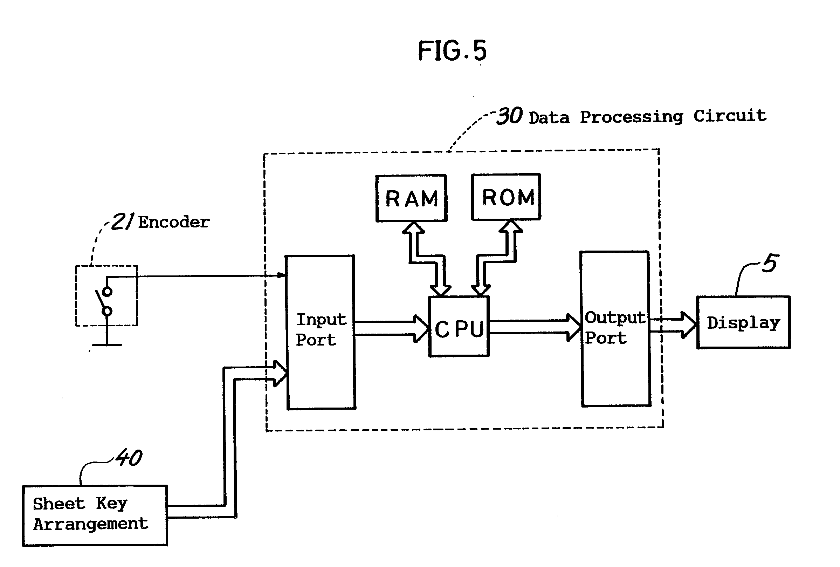

With reference to Fig. 5, the data processing circuit 30 provided on the circuit board 3 comprises a one-chip microcomputer ($\mu$PD7502G) including a 4-bit CPU, 128 x 4-bit RAM, 2048 x 8-bit ROM, input port, output port, etc. The output terminals of the encoder 21 and the sheet key arrangement 40 are connected to the input port, while the input terminals of the display 5 are connected to the output port.

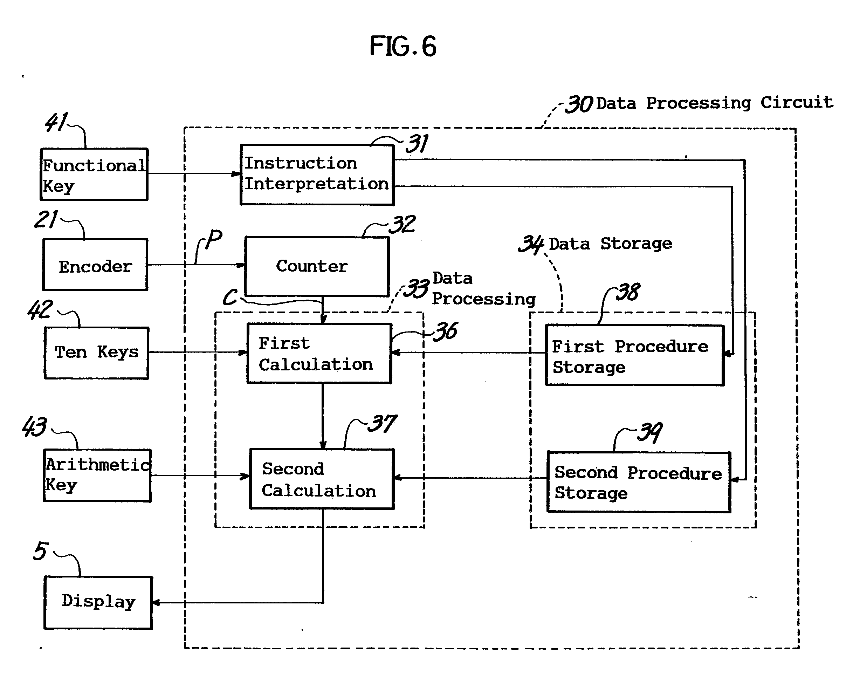

Fig. 6 is a functional block diagram showing the construction of the data processing circuit 30.

The circuit 30 comprises a counter 32 for counting the detection pulses P from the encoder 21, data storage means 34 having stored therein a specified procedure for processing the count value C, command interpretation means 31 for interpreting signals from the function keys 41 when the keys are depressed, and data processing means 33 for retrieving the procedure from the data storage means 34 according to the result of interpretation, receiving the conversion data set by the number entry keys (ten-key arrangement) 42, calculating distance data from the output signal of the encoder 21 and the conversion data by the procedure, and feeding the distance data obtained to the display 5.

The data storage means 34 comprises a first procedure storage 38 and a second procedure storage 39. The data processing means 31 comprises a first calculation processor 36 and a second calculation processor 37.

The first procedure storage 38 has stored therein conversion data for calculating distances in kilometers or miles, and a procedure for converting the count value C of the counter 32 to the distance of movement, L, of the map tracer 2 on the map and calculating the corresponding actual distance D (Km) from the distance L. The first calculation processor 36 retrieves this procedure from the first storage 38 and performs the procedure. When the metric system is used, the distance of movement L (mm) on the map is given by:

L = count value C x 2(mm/count) + X

wherein X is a correction value for making the resolution of the encoder 1 mm. More specifically, upon the measurement by the map tracer has been completed, the encoder 21 is checked as to whether the contact thereof is closed or open. When the contact is closed, X is set to 0 mm, while if it is open, X is set to 1 mm.

For example, when the scale of the map is 1/250,000, "250" is set by number entry keys as a scale conversion factor $\alpha$. Based on the distance of movement, L (mm), on the map, the actual distance D is calculated from the following equation.

D = L x $\alpha$ x 1/1000 = L x 0.25. The result of the calculation is numerically shown on the dispaly 5.

The second procedure storage 39 has stored therein procedures for processing the distance D obtained by the first processor 36 by specified calculations to obtain various items of processed data. These items of processed data include, for example, the time required for a motor vehicle to reach the destination, the amount of gasoline needed therefor, and the average speed of the motor vehicle to be maintained when the scheduled time of arrival at the destination is given. For example, the second storage 39 has stored therein as a computer program a procedure for calculating the time T (hours) required to reach a destination from the equation T = D/V wherein D is the measured distance (Km) obtained from the first processor 36, and V is the average speed (Km/hour) of the motor vehicle entered by number entry keys 42. With the distance D shown on the display 5, the average speed V is entered by the number entry keys, and "PC" key in the key input unit 4 is depressed, whereupon the second calculation processor 37 retrieves the above-mentioned procedure from the second storage 39 and performs the procedure. Consequently, the display 5 indicates the time T required to reach the destination.

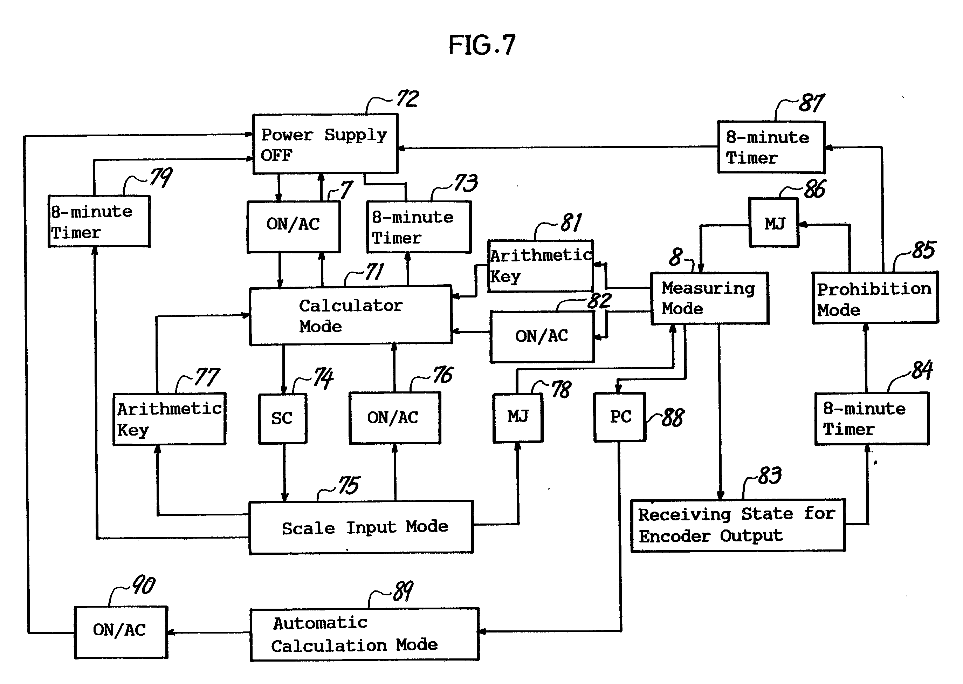

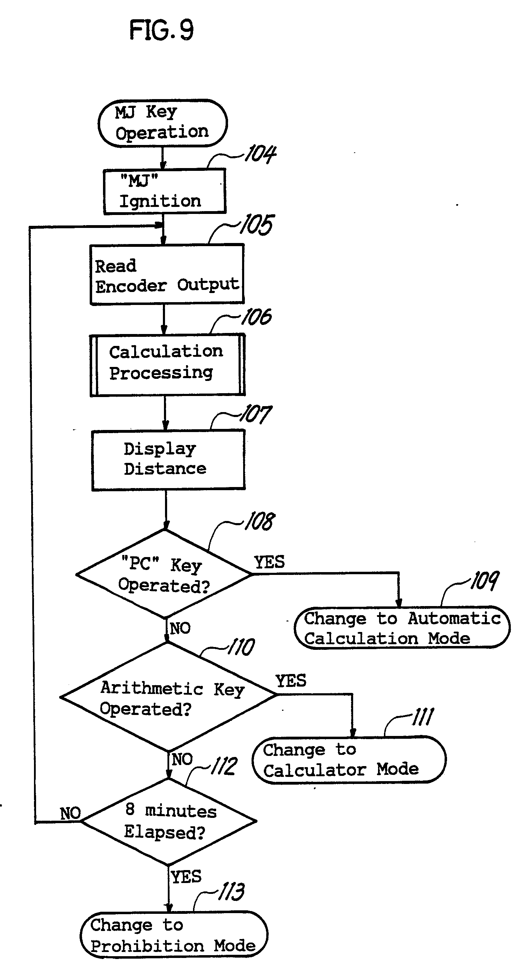

Changes in the operation mode of the device in response to keyed-in instructions will be described with reference to Fig. 7.

(I) Power supply on-off operation

"ON/AC" key, when depressed as at 7, turns on the power supply, and at the same time, the counter, RAM, etc. in the circuit are cleared for initialization. When "ON/AC" key is depressed again as at 7, the power supply is turned off as at 72.

(II) Calculator mode

When "ON/AC" key is depressed as at 7 as stated above, the device is set in calculator mode 71, and the auxiliary display portion "CAL" goes on. Thus, the device is set in the same operation mode as the conventional desk-top electronic calculator, in which desired arithmetic calculations can be conducted using number entry keys 42 and arithmetic keys 43. If no key is depressed during a time interval of 8 minutes, an 8-minute timer 73 functions to turn off the power supply as at 72.

## (III) Scale input mode

"SC" key, when depressed as indicated at 74, brings the device into scale input mode 75, with the auxiliary display portion "SC" lighted up. The scale conversion factor concerned is entered by depressing number entry keys. When " = " key is depressed subsequent to the entry of the conversion factor in this case, the auxiliary display portion "KM" goes on to effect the calculation and display in the measuring mode to be described later in kilometers. If "CHG" key is depressed after the depression of "SC" key before depressing " = " key, the auxiliary display portion "Mi" goes on to effect the subsequent calculation and display in miles. When the depression of "SC" key is followed directly by the depression of " = " key without depressing any number entry key, the conversion factor is set to "1.0," and the auxiliary display portion "mm" is lighted up to give the distance of movement on the map as it is in millimeters as a measurement. When "ON/AC" key is depressed as at 76 or the arithmetic key is depressed as at 77 in this mode, the mode changes to calculator mode 71. If no key input is given for a time interval of 8 minutes, the 8-minute timer functions as at 79 to turn off the power supply as at 72.

## (IV) Measuring mode

"MJ" key, when depressed as at 78, brings the device into measuring mode 8, lighting up the auxiliary display portion "MJ," whereby the circuit is made ready to receive the output of the encoder for 8 minutes. Consequently, the distance measurement is incremented by 2 mm every time one detection pulse P is produced. Further depending on the state of the contact of the encoder, the foregoing step is taken to assure the resolution of 1 mm. The distance data thus obtained is multiplied by the scale conversion factor, and the result is stored in the RAM within the circuit and is also shown on the display 5. When the circuit is made ready for the receipt of the encoder output as at 83, 8-minute timer 84 starts to operate at the same time. After the completion of the timer operation, the device is brought into prohibition mode as at 85. In this mode, the auxiliary display portion "MJ" flickers, and no output is received from the encoder. Subsequently, "MJ" key is depressed to change the mode to measuring mode 8. If no key input is given for a time interval of 8 minutes, 8-minute timer 87 functions to turn off the power supply as at 72.

## (V) Change from measuring mode to calculator mode

When the arithmetic key is depressed as at 81 after the completion of measurement in measuring mode 8, the device is set in calculator mode 71, in which the distance measurement in the RAM can be further subjected to an arithmetic operation. The device can be brought into calculator mode 71 also by depressing "ON/AC" key as indicated at 82.

## (VI) Automatic calculation mode

When "PC" key is depressed after the completion of measurement in measuring mode 8, the mode changes to automatic calculation mode 89. The distance measurement in the RAM can then be processed by a specified calculation. For example, the second procedure storage 39 may have stored therein procedures for calculating the time required for a motor vehicle to reach a destination and the fuel cost required therefor. If the speed of the vehicle, and the fuel cost or the like are then given as input data, the desired items of data can be calculated and numerically shown on the display 5. When "ON/AC" key is depressed as at 90, the power supply is turned off as at 72.

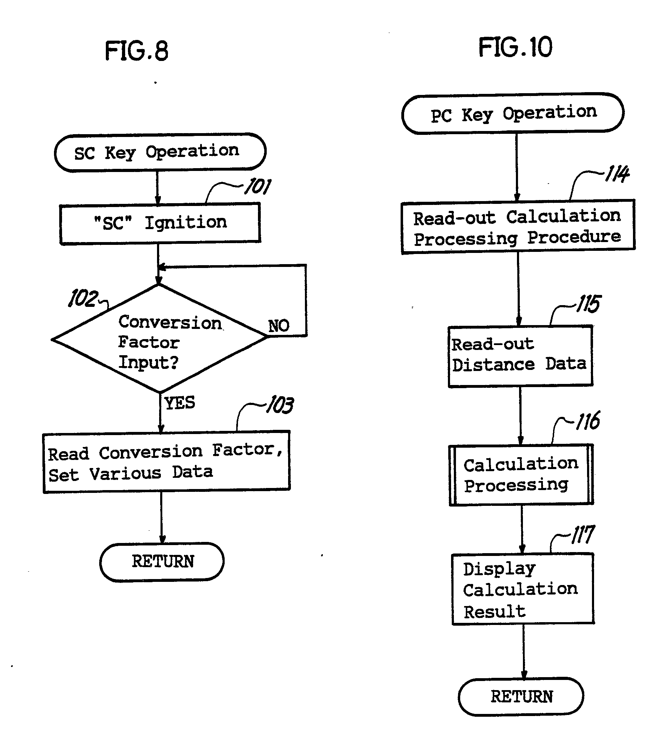

With reference to Figs. 8 to 10, the basic operation of the circuit will be described when it is in the scale input mode, measuring mode and automatic calculation mode described.

With reference to Fig. 8, "SC" key is depressed to set the device in scale input mode. The circuit waits for an input of scale conversion factor as at 102. The input, when given, is stored in the RAM within the circuit. When "CHG" key is not depressed with the input of the conversion factor, various items of data are stored as at 103 at a specified address in the RAM for subsequently conducting calculations in kilometers. If "CHG" key is depressed, data is set as at 103 for subsequently conducting calculations in miles.

When "MJ" key is depressed to set the device in measuring mode, the auxiliary display "MJ" goes on as at 104, and the circuit starts receiving the output of the encoder as at 105 and executes a distance calculation process 106 every time the encoder output is given. For this process, the scale conversion procedure is retrieved from the first storage 38, and the distance calculated by the procedure is numerically shown on the display as at 107. "PC" key is thereafter checked as to whether it has been depressed as at 108. When it has been depressed, the mode changes to automatic calculation mode as at 109. If otherwise, the arithmetic key is checked as to whether it has been depressed as at 110. When it has been depressed, the mode changes to calculator mode. If otherwise, whether 8 minutes has elapsed since the depression of "MJ" key is inquired as at 112. When the answer is in the negative, the circuit continues to receive the encoder output as at 105. When the answer is in the affirmative, the mode changes to inhibition mode as at 113.

When "PC" key is depressed as seen in Fig. 10 to set the device in automatic calculation mode, the desired procedure is retrieved as at 114 from the second storage 39, and the distance data obtained in the measuring mode is also retrieved as at 115. The data is then processed as at 116 to obtain the desired data such as the time required to reach the contemplated destination.

The result of calculation is numerically shown on the display as at 117.

With the measuring device of the invention described above, the scale of the map is given as input data when the distance is to be measured, so that the device is usable for maps of any scale. Moreover, the device is compact and is therefore convenient to carry.

The construction of the device of the invention is not limited to that of the foregoing embodiment but can be modified variously by one skilled in the art without departing from the scope of the invention as defined in the appended claims.

**Claims**

1. A device for measuring a distance along a curve having a tracer (2) in the form of a disk and provided on a portable casing (1), the tracer (2) having a periphery at least partly exposed from the casing (1) and rotatingly movable to measure the distance, the device being characterized in that the casing (1) is provided on its front side with a key input unit (4) having function keys (41) and number entry keys (42) and with a display (5) for showing numerical values thereon, the casing (1) being internally provided with an encoder (21) coupled to the tracer (2) for detecting the angle of rotation of the tracer and a data processing circuit (30), the data processing circuit (30) comprising:

a) a counter (32) for counting output pulses from the encoder (21),

b) data storage means (34) having stored therein a calculation procedure for converting the output of the counter (32) to distance data,

c) command interpretation means (31) for interpreting depression signals from the function keys (41), and

d) data processing means (33) for retrieving the procedure from the data storage means (34) according to the result of interpretation by the command interpretation means, receiving conversion data set by some of the number entry keys (42), calculating distance data from the output of the encoder (21) and the conversion data by the procedure, and feeding the distance data obtained to the display (5).

2. A device as defined in claim 1 wherein the key input unit (4) further has arithmetic keys (43) for subjecting the distance data to an optional arithmetic operation, and the processed data obtained by the manipulation of the arithmetic key is sent to the display (5) and numerically shown thereon.

3. A device as defined in claim 1 wherein the data storage means (34) comprises a first procedure storage (38) having stored therein the procedure for calculating the distance data from the output of the counter (32), and a second procedure storage (39) having stored therein a procedure for calculating specified processed data from the distance data, and the data processing means (33) comprises a first calculation processor (38) for processing the output of the counter (32) and the signals from the number entry keys (42) depressed by the procedure stored in the first storage (38), and a second calculation processor (37) for processing the distance data supplied from the first processor (36) by the procedure stored in the second storage (39), the distance data and the processed data obtained by the data processing means (33) being fed to the display (5) and numerically shown thereon.

4. A device as defined in any one of claims 1 to 3 wherein the casing (1) is in the form of a card approximately 6 mm in thickness, and the tracer (2) is in the form of a disk approximately 13 mm in diameter and having a saw-toothed periphery, the tracer (2) being supported by the casing (1) at one end thereof and being rotatable in a plane parallel to the main plane of the casing.

## FIG.1

## FIG.2

# FIG.3

# FIG.4

# FIG.4A

# FIG.4B

## FIG.5

30 Data Processing Circuit

21 Encoder

RAM  ROM

Input Port

CPU

Output Port

5

Display

40

Sheet Key Arrangement

EP 0 311 113 A2

# FIG.6

- 41 Functional Key
- 21 Encoder
- 42 Ten Keys
- 43 Arithmetic Key
- 5 Display

- 30 Data Processing Circuit
- 31 Instruction Interpretation
- 32 Counter
- 33 Data Processing
- 34 Data Storage
- 36 First Calculation
- 37 Second Calculation
- 38 First Procedure Storage
- 39 Second Procedure Storage

P
C

EP 0 311 113 A2

# FIG.7

# FIG. 9

```
        ╭─────────────╮
        │  MJ Key     │
        │  Operation  │
        ╰─────────────╯
               │        ╱104
        ┌─────────────┐
        │  "MJ"       │
        │  Ignition   │
        └─────────────┘
               │        ╱105
        ┌─────────────┐
        │  Read       │
        │  Encoder Output │
        └─────────────┘
               │        ╱106
        ┌─────────────┐
        │║ Calculation │
        │║ Processing  │
        └─────────────┘
               │        ╱107
        ┌─────────────┐
        │  Display    │
        │  Distance   │
        └─────────────┘
               │        ╱108
             ╱─────────╲              ╱109
            ╱  "PC" Key ╲  YES   ╭──────────────────╮
            ╲ Operated? ╱────────│ Change to Automatic │
             ╲─────────╱         │ Calculation Mode    │
               │ NO              ╰──────────────────╯
               │        ╱110
             ╱─────────╲              ╱111
            ╱ Arithmetic Key ╲ YES  ╭──────────────╮
            ╲  Operated?     ╱──────│ Change to     │
             ╲─────────╱            │ Calculator Mode │
               │ NO   ╱112          ╰──────────────╯
             ╱─────────╲
       NO   ╱ 8 minutes ╲
      ┌─────╲ Elapsed?  ╱
      │      ╲─────────╱
      │         │ YES
      │              ╱113
      │      ╭──────────────────╮
      │      │ Change to         │
      │      │ Prohibition Mode  │
      │      ╰──────────────────╯
      └──────
```

# FIG.8

SC Key Operation

↓ ~101

"SC" Ignition

↓

102 ⟍ Conversion Factor Input? —NO→

↓ YES

~103

Read Conversion Factor, Set Various Data

↓

RETURN

# FIG.10

PC Key Operation

↓ ~114

Read-out Calculation Processing Procedure

↓ ~115

Read-out Distance Data

↓ ~116

Calculation Processing

↓ ~117

Display Calculation Result

↓

RETURN